# EUROPEAN PATENT APPLICATION

(11) **EP 4 293 083 A1**
(43) Date of publication of application: **20.12.2023**
(21) Application number: 22752801.5
(22) Date of filing: 10.02.2022
(51) Int. Cl.: C09C 1/40, C09C 3/08, C09D 201/00, C09D 11/037, C09D 7/62

(54) **PIGMENT DISPERSION**

(30) Priority: 10.02.2021 JP 2021019893
(71) Applicant: Toyo Aluminium Kabushiki Kaisha, Osaka-shi, Osaka 541-0056 (JP)
(72) Inventor: NAKAO, Takayuki, Osaka-shi, Osaka 541-0056 (JP); LIU, Yang, Osaka-shi, Osaka 541-0056 (JP)
(74) Representative: Reitstötter Kinzebach
(86) International application number: PCT/JP2022/005272
(87) International publication number: WO 2022/172979

(57) **Abstract**

Provided is a vapor-deposited aluminum pigment dispersion which achieves both of specular gloss and water resistance which allows usage as an waterborne paint. The pigment dispersion includes: a vapor-deposited aluminum pigment; an organic phosphoric acid compound having a straight chain alkyl group having eight or more carbon atoms; and a solvent, the vapor-deposited aluminum pigment is coated at least partially with at least a part of the organic phosphoric acid compound, and the vapor-deposited aluminum pigment dispersion has a viscosity of less than one Pa s when the viscosity is measured by Brookfield RVT DV2T HB-type Viscometer (at 20°C, CPA-40Z cone spindle, and 20 rpm).

## Description

### TECHNICAL FIELD

The present invention relates generally to pigment dispersions and, in particular, to a pigment dispersion which includes a vapor-deposited aluminum pigment.

### BACKGROUND ART

Conventionally, there has been demanded specular gloss in printing and painting.

For example, described in Japanese Unexamined Patent Application Publication (Translation of PCT Application) No. 2018-534403 (Patent Literature 1) is an offset printing ink which includes a PVD aluminum pigment coated with a leafing additive, a binder, and an oil type solvent such as mineral oil, vegetable oil, and a fatty acid ester or a mixture of the mineral oil, the vegetable oil, and the fatty acid ester.

### CITATION LIST

### PATENT LITERATURE

Patent Literature 1: Japanese Unexamined Patent Application Publication (Translation of PCT Application) No. 2018-534403

### SUMMARY OF THE INVENTION

### TECHNICAL PROBLEM

However, ink in the method described in Patent Literature 1 is an offset printing ink which is hardly made aqueous and does not deal with making ink aqueous, which is demanded of general paint and ink in recent years.

Therefore, an object of the present invention is to provide a vapor-deposited aluminum pigment dispersion which achieves both of specular gloss and water resistance which allows the vapor-deposited aluminum pigment dispersion to be used as an waterborne paint.

### SOLUTION TO PROBLEM

The present inventors have devoted themselves to earnest research. As a result, the present inventors have found out that by using a vapor-deposited aluminum pigment as an aluminum pigment, coating the vapor-deposited aluminum pigment with an organic phosphoric acid compound having a straight chain alkyl group having a specific carbon number, and suppressing a viscosity of a pigment dispersion less than a specific viscosity, water resistance is enhanced while specular gloss by the vapor-deposited aluminum pigment is maintained and furthermore, leafing properties can be enhanced.

On the basis of the above-described findings, a pigment dispersion according to the present invention includes: a vapor-deposited aluminum pigment; an organic phosphoric acid compound having a straight chain alkyl group having eight or more carbon atoms; and a solvent, the vapor-deposited aluminum pigment is coated at least partially with at least a part of the organic phosphoric acid compound, and the pigment dispersion has a viscosity of less than one Pa s when the viscosity is measured by Brookfield RVT DV2T HB-type Viscometer (at 20°C, CPA-40Z cone spindle, and 20 rpm).

By doing this way, a vapor-deposited aluminum which achieves both of specular gloss and water resistance which allows the vapor-deposited aluminum to be used as an waterborne paint can be provided.

### DESCRIPTION OF EMBODIMENT

A pigment dispersion according to the present invention includes a vapor-deposited aluminum pigment, an organic phosphoric acid compound having a straight chain alkyl group having eight or more carbon atoms, and a solvent, the vapor-deposited aluminum pigment is coated at least partially with at least a part of the organic phosphoric acid compound, and the pigment dispersion has a viscosity of less than one Pa s when the viscosity is measured by Brookfield RVT DV2T HB-type Viscometer (at 20°C, CPA-40Z cone spindle, and 20 rpm).

The vapor-deposited aluminum piggment is not particularly limited, and the heretofore known vapor-deposited aluminum pigment can be used.

Although an average particle diameter of the vapor-deposited aluminum pigment is not particularly limited, it is preferable that a volume average median diameter (D₅₀) thereof is 0.1 pm or more and 50 pm or less and it is more preferable that the volume average median diameter (D₅₀) thereof is one pm or more and 20 pm or less. If the volume average median diameter (D₅₀) is less than 0.1 pm, mutual overlapping of particles on a coated object increases and there may be a case where specular glossiness is reduced. On the other hand, if the volume average median diameter (D₅₀) exceeds 50 pm, for example, when the pigment dispersion is sprayed by a spray, a spray nozzle is easily clogged and there may be a case where painting unevenness on a coated object is caused. The volume average median diameter (D₅₀) of the vapor-deposited aluminum pigment can be measured by using, for example, a laser scattering type particle size distribution measuring apparatus. Note that in a granule region where the volume average median diameter (D₅₀) is 0.1 µm, immediately before the measurement, ultrasonic dispersion is required.

Although a thickness of the vapor-deposited aluminum pigment is not particularly limited, it is preferable that the thickness thereof is 5 nm or more and 100 nm or less and it is more preferable that the thickness thereof is 10 nm or more and 50 nm or less. If the thickness of the vapor-deposited aluminum pigment is less than 5 nm, there may be a case where it is difficult to manufacture the vapor-deposited aluminum pigment. On the other hand, if the thickness of the vapor-deposited aluminum pigment exceeds 100 nm, it is likely that specular gloss which is a feature of the vapor-deposited aluminum pigment is markedly reduced. The thickness of the vapor-deposited aluminum pigment can be measured, for example, from an image of a cross section shot by using an electron microscope.

It is preferable that the organic phosphoric acid compound is at least one kind selected from the group consisting of a phosphate ester, an acidic phosphate ester, a chlorinated phosphate ester, a phosphite ester, and a condensed phosphate ester of each of the phosphate ester, the acidic phosphate ester, the chlorinated phosphate ester, and the phosphite ester. When the organic phosphoric acid compound adsorbs onto a surface of the vapor-deposited aluminum pigment and coats at least a part of the vapor-deposited aluminum pigment, water is hindered from approaching the vapor-deposited aluminum pigment by an organic group and water resistance of the vapor-deposited aluminum pigment is enhanced. Since among the above-mentioned esters, the acidic phosphate ester can strongly adsorb onto the surface of the vapor-deposited aluminum pigment, thereby increasing the water resistance, the acidic phosphate ester is preferable.

The organic phosphoric acid compound used for the pigment dispersion according to the present invention is the organic phosphoric acid compound having the straight chain alkyl group as an organic group. If the organic group of the organic phosphoric acid compound has branching or a double bond, there may be a case where a reduction in leafing properties is caused. This is because bending of a carbon chain due to the branching or the double bond causes the organic group to make mutual interference and thus, a sufficient organic phosphoric acid compound cannot adsorb onto the surface of the vapor-deposited aluminum pigment.

The number of carbon atoms of the straight chain alkyl group of the organic phosphoric acid compound is eight or more and 30 or less and preferably, is 10 or more and 20 or less. If the number of carbon atoms is less than eight, sufficient water resistance and leafing properties cannot be obtained. On the other hand, even if the number of carbon atoms exceeds 30, further effect to enhance the leafing properties cannot be obtained.

It is preferable that as the organic phosphoric acid compound, an organic phosphoric acid compound which is in a solid state at 25°C is used. By doing this way, the water resistance and a leafing value tend to increase.

It is preferable that an amount of the organic phosphoric acid compound is 10 parts by mass or more and 100 parts by mass or less with respect to 100 parts by mass of the vapor-deposited aluminum pigment and it is more preferable that the amount thereof is 20 parts by mass or more and 50 parts by mass or less. If the amount of the organic phosphoric acid compound is less than 10 parts by mass with respect to 100 parts by mass of the vapor-deposited aluminum pigment, there may be a case where the surface of the vapor-deposited aluminum pigment cannot be sufficiently coated and it is likely that the water resistance and the leafing properties become insufficient. If the amount of the organic phosphoric acid compound exceeds 100 parts by mass with respect to 100 parts by mass of the vapor-deposited aluminum pigment, there may be a case where while being stored at room temperature, the organic phosphoric acid compound precipitates.

Although the solvent is not particularly limited, in order to make the pigment dispersion aqueous, it is preferable that the solvent is a hydrophilic solvent. As the hydrophilic solvent, alcohols, glycols, glycol ethers, acetone, or the like may be used.

In addition to the vapor-deposited aluminum pigment, the organic phosphoric acid compound, and the solvent, the pigment dispersion may include an additive and the like. Although the additive is not particularly limited, a dispersant, a surfactant, an antisettling additive, a leveling agent, a thixotropic conditioning agent, or the like may be used.

The pigment dispersion includes an waterborne resin composition and can also be thereby made to be an waterborne paint. As the waterborne resin composition, the heretofore known waterborne resin composition such as emulsion resin and dispersion can be used in accordance with use application.

When the pigment dispersion is the waterborne paint, although an amount of the vapor-deposited aluminum pigment varies in accordance with use application such as ink, paint or the like, it is preferable that the amount of the vapor-deposited aluminum pigment is one parts by mass or more and 500 parts by mass or less with respect to 100 parts by mass of the waterborne resin composition.

Next, a method for manufacturing the pigment dispersion according to the present invention will be described.

The pigment dispersion can be prepared by using the above-described raw materials and employing the heretofore known method. For example, while the vapor-deposited aluminum pigment and the solvent are being agitated, the organic phosphoric acid compound is added thereto; the resultant is further agitated; and the vapor-deposited aluminum pigment is coated at least partially with at least a part of the organic phosphoric acid compound, thereby allowing a slurry-state pigment composition to be prepared.

The pigment dispersion manufactured as described above has a viscosity of less than one Pa s when the viscosity is measured by Brookfield RVT DV2T HB-type Viscometer (at 20°C, CPA-40Z cone spindle, and 20 rpm). Preferably, the viscosity is 0.1 or more and 0.6 or less.

The present invention is summarized as follows.
[1] The pigment dispersion according to the present invention includes the vapor-deposited aluminum pigment, the organic phosphoric acid compound having the straight chain alkyl group having eight or more carbon atoms, and the solvent; the vapor-deposited aluminum pigment is coated at least partially with at least a part of the organic phosphoric acid compound; and the pigment dispersion has the viscosity of less than one Pa s when the viscosity is measured by Brookfield RVT DV2T HB-type Viscometer (at 20°C, CPA-40Z cone spindle, and 20 rpm).
[2] In the pigment dispersion according to the present invention, it is preferable that the organic phosphoric acid compound is the organic phosphoric acid compound which is in the solid state at 25°C.
[3] In the pigment dispersion according to the present invention, it is preferable that the organic phosphoric acid compound is at least one kind selected from the group consisting of the phosphate ester, the acidic phosphate ester, the chlorinated phosphate ester, the phosphite ester, and the condensed phosphate ester of each of the phosphate ester, the acidic phosphate ester, the chlorinated phosphate ester, and the phosphite ester.
[4] It is preferable that the pigment dispersion according to the present invention includes 15 parts by mass or more and 80 parts by mass or less of the organic phosphoric acid compound with respect to 100 parts by mass of the vapor-deposited aluminum pigment.
[5] In the pigment dispersion according to the present invention, it is preferable that the organic phosphoric acid compound is the acidic phosphate ester having the straight chain alkyl group having eight or more and 30 or less carbon atoms.
[6] The waterborne paint according to the present invention includes the pigment dispersion of any of the above-mentioned [1] to [5] and the waterborne resin.
[7] It is preferable that the waterborne paint according to the present invention includes one parts by mass or more and 500 parts by mass or less of the vapor-deposited aluminum pigment with respect to 100 parts by mass of the waterborne resin.

### [Examples]

The present invention will be described further in detail by Examples and Test Examples. However, the present invention is not limited to these.

### [Example 1]

Inputted into a one-liter reactor vessel was 500 g of TS-710PM manufactured by Toyo Aluminium K.K. (D₅₀: 10 pm, an average thickness of 25 nm, 10 percent by mass of a nonvolatile content, a solvent: propylene glycol monomethyl ether) including a vapor-deposited aluminum pigment and a solvent, and while that inputted was agitated by agitating blades, a temperature of that inputted was increased to 80°C. Next, as an organic phosphoric acid compound, 15 g of a granular stearyl acid phosphate (manufactured by SC Organic Chemical Co., Ltd., a trade name: Phoslex A-18, a melting point of 70°C, 100 percent by mass of a nonvolatile content, the number of carbon atoms of a straight chain alkyl group was 18) was inputted and agitation was made for 30 minutes, thereby obtaining a slurry-state vapor-deposited aluminum pigment dispersion having 13 percent by mass of a nonvolatile content. A viscosity of the obtained pigment dispersion was measured by Brookfield RVT DV2T HB-type Viscometer (at 20°C, CPA-40Z cone spindle, and 20 rpm). The viscosity was 0.2 Pa s.

### [Example 2]

A slurry-state vapor-deposited aluminum pigment dispersion having 13 percent by mass of a nonvolatile content was obtained in a manner similar to the manner in Example 1 except that the organic phosphoric acid compound in Example 1 was changed to 15 g of a granular lauryl acid phosphate (manufactured by SC Organic Chemical Co., Ltd., a trade name: Phoslex A-12, a melting point of 45°C, 100% of a nonvolatile content, the number of carbon atoms of a straight chain alkyl group was 12). A viscosity was 0.2 Pa s.

### [Comparative Example 1]

The vapor-deposited aluminum pigment and the solvent (manufactured by Toyo Aluminium K.K., TS-710PM) used in Example 1 were used as a vapor-deposited aluminum pigment dispersion without processing those. A viscosity was 0.4 Pa s.

### [Comparative Example 2]

A slurry-state vapor-deposited aluminum pigment dispersion having 13 percent by mass of a nonvolatile content was obtained in a manner similar to the manner in Example 1 except that instead of the organic phosphoric acid compound in Example 1, 15 g of granular stearic acid (manufactured by NOF CORPORATION, a trade name: BEAD STEARIC ACID CHERRY, a melting point of 60°C, 100% of a nonvolatile content) was used. A viscosity was 0.3 Pa s.

### [Comparative Example 3]

A slurry-state vapor-deposited aluminum pigment dispersion having 11 percent by mass of a nonvolatile content was obtained in a manner similar to the manner in Example 1 except that the organic phosphoric acid compound in Example 1 was changed to 15 g of an oleyl acid phosphate which is in a liquid state at 25°C (manufactured by SC Organic Chemical Co., Ltd., a trade name: Phoslex A-18C, a straight-chain alkenyl group having one unsaturated bond and having 18 carbon atoms). A viscosity was 0.4 Pa.s.

### [Comparative Example 4]

A slurry-state vapor-deposited aluminum pigment dispersion having 11 percent by mass of a nonvolatile content was obtained in a manner similar to the manner in Example 1 except that the organic phosphoric acid compound in Example 1 was changed to 15 g of a butyl acid phosphate which is in a liquid state at 25°C (manufactured by SC Organic Chemical Co., Ltd., trade name: Phoslex A-4, the number of carbon atoms of a straight chain alkyl group was four). A viscosity was 0.4 Pa s.

### [Comparative Example 5]

A slurry-state vapor-deposited aluminum pigment dispersion having 13 percent by mass of a nonvolatile content was obtained in a manner similar to the manner in Example 1 except that the organic phosphoric acid compound in Example 1 was changed to 15 g of a 2-ethylhexyl acid phosphate (manufactured by Johoku Chemical Co., Ltd., a trade name: JP-508, a specific gravity of 1.02, an alkyl group having branching and having eight carbon atoms). A viscosity was 0.2 Pa s.

### [Leafing Value Test]

A leafing value of a pigment dispersion in each of Examples and Comparative Examples was measured in accordance with JIS K 5906 : 2009. Results are shown in Table 1.

### [Hydrogen Gas Generation Test]

The pigment dispersion in an amount of 40 g in each of Examples and Comparative Examples was inputted into a 200 mL-bottle for gas generation measurement and next, ion-exchange water in an amount of 160 g was inputted thereinto. After inputting, dispersion was made by a glass rod, and thereafter, the bottle for gas generation measurement was immersed in a constant-temperature water tank at 40°C, and a hydrogen gas generating amount was measured for 48 hours. Results are shown in Table 1.

### [Phosphorus Adsorption Amount Test of Vapor-Deposited Aluminum Pigment]

Aqua regia was added to 0.1 g of a nonvolatile content of the pigment dispersion in each of Examples and Comparative Examples, and thereafter, microwave decomposition was performed for turning into a solution, and an amount of phosphorus was measured by an IPC analysis. Results are shown in Table 1. Each phosphorus adsorption amount shown in Table 1 is a percent by mass of phosphorus with respect to a nonvolatile content of each pigment dispersion.

**[Table 1]**

| | Leafing Value | Gas Generation Amount (48 hours later) | Phosphorus Adsorption Amount |
|---|---|---|---|
| Example 1 | 90 | 0 mL | 1.73% |
| Example 2 | 90 | 4.0 mL | 1.96% |
| Comparative Example 1 | 0 | 30 mL | - |
| Comparative Example 2 | 32 | 6.4 mL | - |
| Comparative Example 3 | 0 | 3.4 mL | 1.42% |
| Comparative Example 4 | 59 | 30 mL or more | 4.80% |
| Comparative Example 5 | 24 | 0 mL | 3.30% |

As shown in Table 1, a leafing value of each of the pigment dispersions in Examples 1 and 2 was 60 or more. On the other hand, a leafing value of each of the pigment dispersions in Comparative Examples was low not only in a case where the organic phosphoric acid compound was not used (Comparative Examples 1 and 2) but also in a case where even the organic phosphoric acid compound was used but the organic phosphoric acid compound did not have the straight chain alkyl group having eight or more carbon atoms (Comparative Examples 3 and 4). In particular, when Example 1 and Comparative Example 3 were compared, although the numbers of carbon atoms of the whole organic phosphoric acid compounds used in Example 1 and Comparative Example 3 were 18 and were the same as each other, the organic phosphoric acid compound in Comparative Example 3 did not have the straight chain alkyl group having eight or more carbon atoms. As a result, an amount of the phosphorus adsorption amount in Comparative Example 3 was smaller than that in Example 1, the leafing value was 90 in Example 1 and was 0 in Comparative Example 3 and a large difference was made. In addition, a gas generation amount of the pigment dispersion in each of Examples 1 and 2 was suppressed.

The described embodiment and Examples are to be considered in all respects only as illustrative and not restrictive. It is intended that the scope of the invention is, therefore, indicated by the appended claims rather than the foregoing description of the embodiment and Examples and that all modifications coming within the meaning and equivalency range of the appended claims are embraced within their scope.

## Claims

1. A pigment dispersion comprising:
a vapor-deposited aluminum pigment;
an organic phosphoric acid compound having a straight chain alkyl group having eight or more carbon atoms; and
a solvent, wherein
the vapor-deposited aluminum pigment is coated at least partially with at least a part of the organic phosphoric acid compound, and
the pigment dispersion has a viscosity of less than one Pa s when the viscosity is measured by Brookfield RVT DV2T HB-type Viscometer (at 20°C, CPA-40Z cone spindle, and 20 rpm).

2. The pigment dispersion according to claim 1, wherein the organic phosphoric acid compound is an organic phosphoric acid compound which is in a solid state at 25°C.

3. The pigment dispersion according to claim 1 or 2, wherein the organic phosphoric acid compound is at least one kind selected from the group consisting of a phosphate ester, an acidic phosphate ester, a chlorinated phosphate ester, a phosphite ester, and a condensed phosphate ester of each of the phosphate ester, the acidic phosphate ester, the chlorinated phosphate ester, and the phosphite ester.

4. The pigment dispersion according to any one of claims 1 to 3, including 15 parts by mass or more and 80 parts by mass or less of the organic phosphoric acid compound with respect to 100 parts by mass of the vapor-deposited aluminum pigment.

5. The pigment dispersion according to any one of claims 1 to 4, wherein the organic phosphoric acid compound is an acidic phosphate ester having a straight chain alkyl group having eight or more and 30 or less of carbon atoms.

6. An waterborne paint comprising: the pigment dispersion according to any one of claims 1 to 5; and an waterborne resin.

7. The waterborne paint according to claim 6, including one part by mass or more and 500 parts by mass or less of the vapor-deposited aluminum pigment with respect to 100 parts by mass of the waterborne resin.
